# EUROPEAN PATENT APPLICATION

(11) **EP 3 570 064 A1**
(43) Date of publication of application: **20.11.2019**
(21) Application number: 18803524.0
(22) Date of filing: 24.04.2018
(51) Int. Cl.: G01S 7/481, G01S 17/42, G01J 3/02

(54) **LASER RADAR SYSTEM AND LASER RANGING METHOD**

(30) Priority: 04.04.2018 CN 201810297479
(71) Applicant: Deepwater Optoelectronics Co., Ltd., Wuxi, Jiangsu 214000 (CN)
(72) Inventor: SUN, Weiwei, Wuxi Jiangsu 214000 (CN); WANG, Haiying, Wuxi Jiangsu 214000 (CN)
(74) Representative: Valea AB
(86) International application number: PCT/CN2018/084242
(87) International publication number: WO 2019/192038

(57) **Abstract**

Embodiments of the present invention provide a LiDAR system and a laser ranging method. The LiDAR system includes: a laser scanning component and a rotary component; the laser scanning component includes an emitter assembly, an emitter lens, a receiver lens and a receiver assembly. Further, the emitter assembly includes a plurality of emitter modules, a plurality of multi-core optical fiber connectors and a first optical fiber array; and the receiver assembly includes a plurality of receiver modules, a plurality of multi-core optical fiber connectors and a second optical fiber array. With the LiDAR system according to the embodiments of the present invention, by using the optical fiber array as a laser emitter end of an emitter assembly, and a reflected light incident end of a receiver assembly, the size of the LiDAR may be reduced, and the production cost may be lowered. In addition, by assembling the plurality of laser emitters and the plurality of receivers to the optical fiber array in groups by using multi-core optical fiber connectors, the LiDAR may be structurally modularized, such that the maintenance cost of the LiDAR is lowered.

## Description

This application claims priority to Chinese Patent Application No. 201810297479.8, filed with Chinese Patent Office on April 4, 2018 and entitled " LIGHT DETCETION AND RANGING SYSTEM AND LASER RANGING METHOD", the entire contents of which are incorporated herein by reference.

### TECHNICAL FIELD

The present invention relates to the technical field of light detection and ranging, and in particular, relates to a light detection and ranging system and a laser ranging method.

### BACKGROUND

A light detection and ranging (LiDAR) system is called as a LiDAR system. The LiDAR works based on the following principles: a laser emitter emits a laser to a target object, a receiver receives reflected light from the target object, and the LiDAR calculates a distance from the LiDAR to the target object based on the laser ranging principle. One laser emitter and one receiver form a laser ranging channel. When the laser uninterruptedly scans the target object, data of all the target points on the target object may be acquired, and a three-dimensional image of the target object may be obtained by subjecting the data to imaging.

A common three-dimensional LiDAR is a mechanically rotary LiDAR, which includes a plurality of pairs of laser emitter and receiver. Each pair of laser emitter and receiver face toward a different spatial angular position, thereby forming a sector-like coverage. Then the plurality of pairs of laser emitter and receiver are driven by a single-axis rotating mechanism to rotate as a whole, thereby implementing three-dimensional laser scanning.

Since the mechanically rotary LiDAR has a large number of laser emitters and receivers which have a big size, a great physical spacing is defined between adjacent laser ranging channels. As a result, the entire LiDAR has a big size but a low angular resolution. Further, since the laser emitter and receiver in each laser ranging channel need to be accurately calibrated to ensure that focusing is accurate, and emit and receive light axe are accurately parallel. Moreover, a tiny but accurate angular spacing needs to be ensured between adjacent laser ranging channels. Consequently, such LiDARs have a great workload in assembling and calibration, and a low production efficiency, thus the production cost is high. In addition, when the laser ranging channels are calibrated, all the laser emitters and receivers need to be fixed adhesively. Therefore, once one or several laser ranging channels are damaged, all the laser ranging channels need to be re-assembled and re-calibrated, and thus the repair cost is extremely high.

### SUMMARY

In view of the above, embodiments of the present invention provide a LiDAR system. The LiDAR system includes: a laser scanning component and a rotary component, where the rotary component is configured to rotate the laser scanning component; and the laser scanning component includes: an emitter assembly, a receiver assembly and a receiver lens. The emitter assembly includes a plurality of emitter modules, a plurality of multi-core optical fiber connectors and a first optical fiber array, each of the plurality of emitter modules including a plurality of laser emitters, where each laser emitter corresponding to an optical fiber is configured to emit laser and light transmission is implemented via the optical fiber, and the plurality of optical fibers corresponding to the plurality of laser emitters are connected to the first optical fiber array via a multi-core optical fiber connector. The emitter lens is configured to collimate and emit lasers from the first optical fiber array. The receiver assembly includes a plurality of receiver modules, a plurality of multi-core optical fiber connectors and a second optical fiber array, each of the plurality of receiver modules including a plurality of receivers, where each receiver corresponding to an optical fiber is configured to receive reflected light transmitted via the optical fiber, and the plurality of optical fibers corresponding to the plurality of receivers are connected to the second optical fiber array via a multi-core optical fiber connector. The receiver lens is configured to receive reflected light of the lasers and converge the reflected light of the lasers into the second optical fiber array.

Further, each emitter module further includes a plurality of beam shapers, the plurality of beam shapers one-to-one corresponding to the plurality of laser emitters in the emitter module, and the beam shapers being configured to couple the lasers emitted by the laser emitters to the corresponding optical fibers. Optionally, the beam shaper may be a dual-cylindrical lens, generatrixes of two cylindrical surfaces of the dual-cylindrical lens being orthogonal to each other.

Alternatively, the beam shaper is a beam shaper based on optics diffraction. The beam shaper includes: a collimate lens, configured to collimate the beam emitted by the laser emitter in a fast axis direction to form an elongated strip-shaped beam; a first diffraction element, configured to divide the elongated strip-shaped beam into a plurality of beams, and except for a central beam, remaining beams being deflected towards different spatial directions; and a second diffraction element, configured to correct the remaining beams, such that the remaining beams overlap with the central beam and converge the overlapped beams to end faces of the corresponding optical fibers.

Optionally, the beam shaper is a beam shaper based on optics diffraction. The beam shaper includes: a first lens, configured to collimate the beam emitted by the laser emitter in a fast axis direction to form an elongated strip-shaped beam; a first diffraction element, configured to divide the elongated strip-shaped beam into a plurality of beams, and except for a central beam, remaining beams being deflected towards different spatial directions; a second diffraction element, configured to correct the remaining beams, such that the remaining beams are parallel to the central beam; and a second lens, configured to overlap the remaining beams from the second diffraction element with the central beam and converge the overlapped beams to end faces of the corresponding optical fibers.

Further, each receiver module further includes a plurality of micro-lens, the plurality of micro-lens one-to-one corresponding to the plurality of receivers in the receiver module, and the micro-lens being configured to converge the reflected light transmitted via the optical fibers to the corresponding receivers.

Further, an end face of the first optical fiber array is on a focal plane of the emitter lens; an end face of the second optical fiber array is on a focal plane of the receiver lens. The first optical fiber array and the second optical fiber array may be a one-dimensional optical fiber array or a two-dimensional optical fiber array.

Optionally, the plurality of emitter modules of the emitter assembly are assembled on the same circuit board, or each emitter module is assembled on a separate circuit board, or the plurality of emitter modules are assembled on a plurality of circuit boards in groups.

Optionally, the plurality of receiver modules of the receiver assembly are assembled on the same circuit board, or each receiver module is assembled on a separate circuit board, or the plurality of receiver modules are assembled on a plurality of circuit boards in groups.

Embodiments of the present invention further provide a laser ranging method, where a LiDAR system is used for laser ranging, and the structure of the LiDAR system is the same as the structure of the above described LiDAR system.

The method includes: rotating, by the rotary component in the LiDAR system, the laser scanning component in the LiDAR system; emitting lasers by each laser emitter in the LiDAR system, where the laser is transmitted via the corresponding optical fiber and is emitted from the first optical fiber array; collimating and emitting, by the emitter lens in the LiDAR system, the laser from the first optical fiber array; receiving and converging, by the receiver lens in the LiDAR system, reflected light of the laser into the second optical fiber array; and receiving, by each receiver in the LiDAR system, the reflected light via the corresponding optical fiber.

Further, in the laser ranging method, each emitter module in the LiDAR system includes a plurality of beam shapers, the plurality of beam shapers one-to-one corresponding to the plurality of laser emitters in the emitter module, coupling, by the beam shapers, the lasers emitted by the laser emitters to the corresponding optical fibers.

Optionally, the beam shaper is a dual-cylindrical lens, generatrixes of two cylindrical surfaces of the dual-cylindrical lens being orthogonal to each other.

Optionally, the beam shaper is a beam shaper based on optics diffraction, and includes an collimate lens, a first diffraction element and a second diffraction element; where the coupling, by the beam shapers, the lasers emitted by the laser emitters to the corresponding optical fibers includes: collimating, by the collimate lens, the beam emitted by the laser emitter in a fast axis direction to form an elongated strip-shaped beam; dividing, by the first diffraction element, the elongated strip-shaped beam into a plurality of beams, and except for a central beam, remaining beams being deflected towards different spatial directions; and correcting, by the second diffraction element, the remaining beams, such that the remaining beams overlap with the central beam, and converging the overlapped beams to end faces of the corresponding optical fibers.

Optionally, the beam shaper is a beam shaper based on optics diffraction, and includes a first lens, a first diffraction element, a second diffraction element and a second lens; where the coupling, by the beam shapers, the lasers emitted by the laser emitters to the corresponding optical fibers includes: collimating, by the first lens, the beam emitted by the laser emitter in a fast axis direction to form an elongated strip-shaped beam; dividing, by the first diffraction element, the elongated strip-shaped beam into a plurality of beams, and except for a central beam, remaining beams being deflected towards different spatial directions; correcting, by the second diffraction element, the remaining beams, such that the remaining beams are parallel to the central beam; and overlapping, by the second lens, the remaining beams from the second diffraction element with the central beam, and converging the overlapped beams to end faces of the corresponding optical fibers.

Further, each receiver module in the LiDAR system further includes a plurality of micro-lens, the plurality of micro-lens one-to-one corresponding to the plurality of receivers in the receiver module, converging, by the micro-lens, the reflected light transmitted via the optical fibers to the corresponding receivers.

Further, an end face of the first optical fiber array is on a focal plane of the emitter lens; an end face of the second optical fiber array is on a focal plane of the receiver lens.

Optionally, the first optical fiber array may be a one-dimensional optical fiber array or a two-dimensional optical fiber array; the second optical fiber array may be a one-dimensional optical fiber array or a two-dimensional optical fiber array.

With the LiDAR system according to the embodiments of the present invention, by using an optical fiber array as a laser emitter end of an emitter assembly, and a reflected light incident end of a receiver assembly, the size of the LiDAR may be reduced, and the production cost may be lowered. In addition, by assembling a plurality of laser emitters and a plurality of receivers to the optical fiber array in groups by using multi-core optical fiber connectors, the LiDAR may be structurally modularized, such that the maintenance cost of the LiDAR is lowered.

### BRIEF DESCRIPTION OF THE DRAWINGS

For a clearer description of the technical solutions according to the embodiments of the present invention, hereinafter brief description is given with reference to the accompanying drawings for illustrating the embodiments. Apparently, the accompanying drawings described hereinafter only illustrate some embodiments of the present invention, and other accompanying drawings may also be derived based on these accompanying drawings.
FIG. 1 is a schematic structural diagram of a LiDAR system according to an embodiment of the present invention;
FIG. 2 is a schematic structural diagram of an emitter assembly in the LiDAR system according to an embodiment of the present invention;
FIG. 3 is a schematic structural diagram of a dual-cylindrical lens in the LiDAR system according to an embodiment of the present invention;
FIG. 4 is a schematic structural diagram of one beam shaper based on optics diffraction in the LiDAR system according to an embodiment of the present invention;
FIG. 5 is a schematic structural diagram of another beam shaper based on optics diffraction in the LiDAR system according to an embodiment of the present invention; and
FIG. 6 is a schematic structural diagram of a receiver assembly in the LiDAR system according to an embodiment of the present invention.

### DETAILED DESCRIPTION

The technical solutions contained in the embodiments of the present invention are described in detail clearly and completely hereinafter with reference to the accompanying drawings for the embodiments of the present invention. Apparently, the described embodiments are only a portion of embodiments of the present invention, but not all the embodiments of the present invention. Based on the embodiments hereinafter, all other embodiments derived by persons of ordinary skill in the art without any creative efforts shall fall within the protection scope of the present invention.

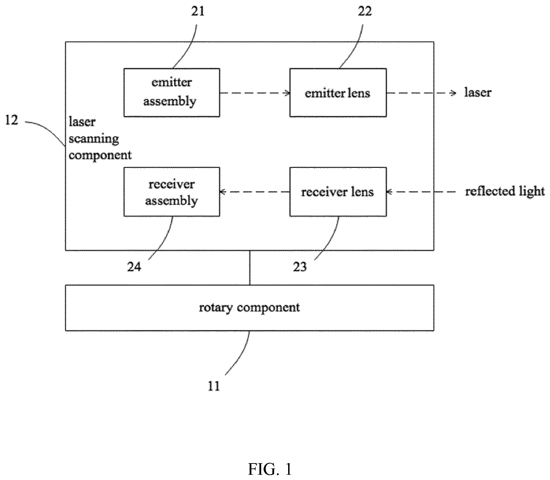

As illustrated in FIG. 1, an embodiment of the present invention provides a LiDAR system. The LiDAR system includes a rotary component 11 and a laser scanning component 12. The rotary component 11 is configured to rotate the laser scanning component 12. Specifically, the rotary component 11 may cause the laser scanning component 12 to continuously rotate by 360 degrees. The laser scanning component 12 includes an emitter assembly 21, an emitter lens 22, a receiver lens 23 and a receiver assembly 24.

Further, the emitter assembly 21 of the laser scanning component 12 includes a plurality of emitter modules, a plurality of optical fiber connectors and a first optical fiber array. The receiver assembly 24 includes a plurality of receiver modules, a plurality of multi-core optical fiber connectors and a second optical fiber array.

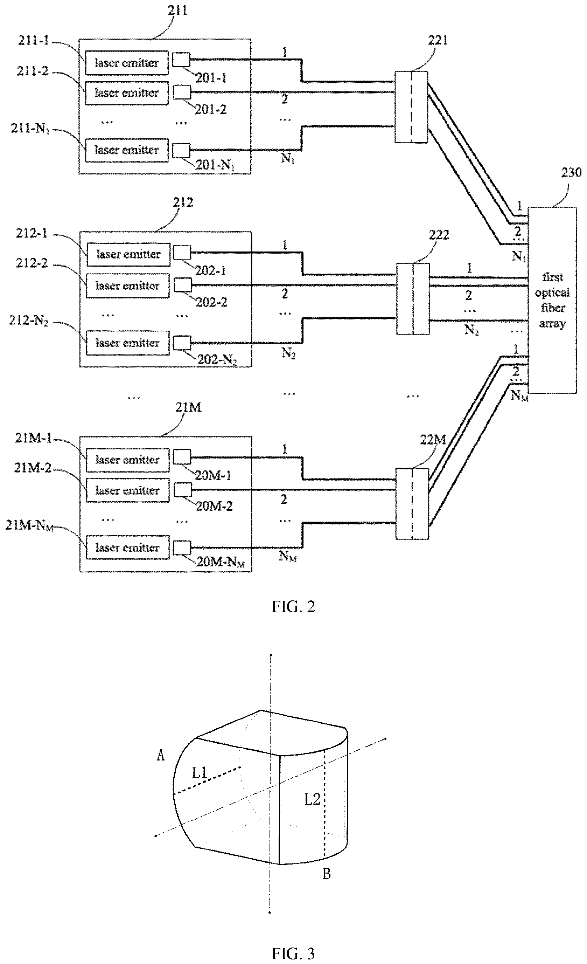

As illustrated in FIG. 2, in an optional embodiment, the emitter assembly 21 according to this embodiment includes M emitter modules, M multi-core optical fiber connectors and a first optical fiber array 230. M is a natural number which is greater than or equal to 2.

For example, the M emitter modules include an emitter module 211, an emitter module 212, ..., and an emitter module 21M; and the M multi-core optical fiber connectors include a multi-core optical fiber connector 221, a multi-core optical fiber connector 222, ..., and a multi-core optical fiber connector 22M.

Specifically, each emitter module in the emitter assembly 21 includes a plurality of laser emitters. Each laser emitter corresponding to an optical fiber is configured to emit laser and light transmission is implemented via the optical fiber, and the plurality of optical fibers corresponding to the plurality of emitters of each emitter module are connected to the first optical fiber array 230 via a multi-core optical fiber connector. As illustrated in FIG. 2:

The emitter module 211 includes N₁ laser emitters, for example, a laser emitter 211-1, a laser emitter 211-2, ..., and a laser emitter 211-N₁. The N₁ laser emitters one-to-one corresponds to N₁ optical fibers, and the N₁ optical fibers are connected to the first optical array 230 by the multi-core optical fiber connector 221 to form N₁ optical paths from the N₁ laser emitters to the first optical fiber array 230.

The emitter module 212 includes N₂ laser emitters, for example, a laser emitter 212-1, a laser emitter 212-2, ..., and a laser emitter 212-N₂. The N₂ laser emitters one-to-one corresponds to N₂ optical fibers, and the N₂ optical fibers are connected to the first optical array 230 by the multi-core optical fiber connector 222 to form N₂ optical paths from the N₂ laser emitters to the first optical fiber array 230.

The emitter module 21M includes N_{M} laser emitters, for example, a laser emitter 21M-1, a laser emitter 21M-2, ..., and a laser emitter 21M-N_{M}. The N_{M} laser emitters one-to-one corresponds to N₂ optical fibers, and the N₂ optical fibers are connected to the first optical array 230 by the multi-core optical fiber connector 22M to form N_{M} optical paths from the N_{M} laser emitters to the first optical fiber array 230.

In the LiDAR system according to the above embodiment, the emitter module 21 totally includes N₁+N₂+...+N_{M} laser emitters. The N₁+N₂+...+N_{M} lasers emitted by the N₁+N₂+...+N_{M} later emitters reaches the first optical fiber array 230 via N₁+N₂+...+N_{M} optical paths, and are emitted from an end face of the first optical fiber array 230. That is, the end face of the first optical fiber array 230 serve as a laser outlet end of the emitter assembly 21.

In this embodiment, N₁, N₂, ..., N_{M} are natural numbers which are greater than or equal to 2.

In an optional embodiment, the plurality of emitter modules of the emitter assembly may be assembled on the same circuit board; or each emitter module is assembled on a separate circuit board, for example, the emitter assembly includes eight emitter modules which are respectively assembled on eight separate circuit boards; or the plurality of emitter modules are assembled on a plurality of circuit boards in groups, for example, the emitter assembly includes eight emitter modules, and each two emitter modules are assembled as a group on one circuit boards, and the eight emitter modules are assembled on four circuit boards.

In a preferred embodiment, the emitter assembly further includes a plurality of beam shapers. The plurality of beam shapers one-to-one correspond to the plurality of laser emitters, and the beam shapers are configured to couple the lasers emitted by the laser emitters to the corresponding optical fibers. As illustrated in FIG. 2:
The emitter module 211 includes N₁ beam shapers, for example, a beam shaper 201-1, a beam shaper 201-2, ..., and a beam shaper 201-N₁. The N₁ beam shapers one-to-one correspond to the laser emitter 211-1, the laser emitter 211-2, ..., and the laser emitter 211-N₁ respectively, and are configured to respectively couple the lasers emitted by the N₁ laser emitters to the corresponding N₁ optical fibers.

The emitter module 212 includes N₂ beam shapers, for example, a beam shaper 202-1, a beam shaper 202-2, ..., and a beam shaper 202-N₂. The N₂ beam shapers one-to-one correspond to the laser emitter 212-1, the laser emitter 212-2, ..., and the laser emitter 212-N₂ respectively, and are configured to respectively couple the lasers emitted by the N₂ laser emitters to the corresponding N₂ optical fibers.

The emitter module 21M include N_{M} beam shapers, for example, a beam shaper 20M-1, a beam shaper 20M-2, ..., and a beam shaper 20M-N_{M}. The N_{M} beam shapers one-to-one correspond to the laser emitter 21M-1, the laser emitter 21M-2, ..., and the laser emitter 21M-N_{M} respectively, and are configured to respectively couple the lasers emitted by the N_{M} laser emitters to the corresponding N_{M} optical fibers.

In this embodiment, N₁, N₂, ..., N_{M} are natural numbers, which are greater than or equal to 2.

In a specific embodiment, the beam shaper may be a dual-cylindrical lens as illustrated in FIG. 3. Generatrixes of two cylindrical surfaces of the dual-cylindrical lens are orthogonal to each other, that is, a generatrix L1 of a cylindrical surface A of the dual-cylindrical lens is orthogonal to a generatrix L2 of a cylindrical surface B of the dual-cylindrical lens.

A high powder pulse laser diode used in a multi-layer LiDAR is an edge emitting laser diode, whose light source is an end face of a chip P-N junction, that is, a slit at an intersection of two planes of the P-N junction. This laser emitter has the features as follows: in a direction parallel to the plane of the P-N junction, a linear dimension of the beam is greater (for example, from 50 µm to several hundreds of µm), and a radiation angle is smaller (for example, 10 degrees); and in a direction vertical to the plane of the P-N junction, the linear dimension of the beam is smaller (for example, from 1 µm to 10 µm), and the radiation angle is greater (for example, 45 degrees). The direction, in which the linear dimension is greater, but the radiation angle is smaller, is referred to as a slow axis; and the direction, in which the linear dimension is smaller, but the radiation angle is greater, is referred to as a fast axis.

According to this embodiment, two independent optical systems are respectively formed for the fast axis and the slow axis of the laser beams by using the dual-cylindrical lens as illustrated in FIG. 3. After the laser emitted by the laser emitter passes through the dual-cylindrical lens, the radiation angle in the fast axis is reduced whereas the radiation angle in the slow axis is increased, such that the beams have an equalized and close radiation angle in both the fast axis and the slow axis. Therefore, the dual-cylindrical lens according to this embodiment may shape elliptical light spots that are greatly different in two directions, the fast axis and the slow axis, into circular or square light spots that are slightly different in the fast axis direction and the slow axis direction, such that the beams are highly efficiently coupled to the optical fibers.

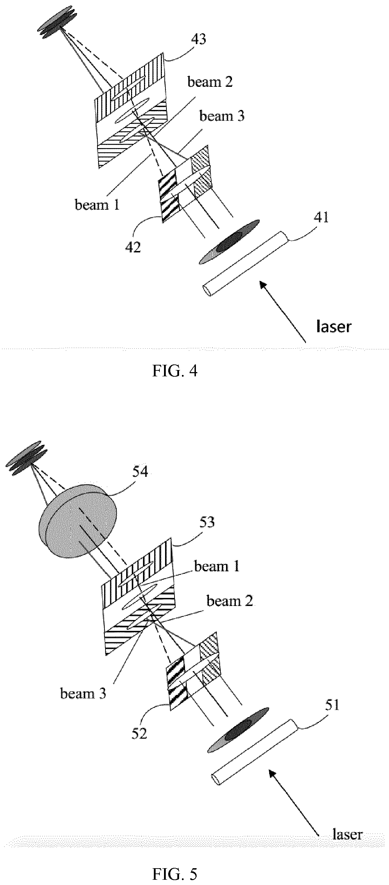

Optionally, another beam shaper may be a beam shaper based on optics diffraction. As one implementation, as illustrated in FIG. 4, another beam shaper based on optics diffraction includes: an collimate lens 41, a first diffraction element 42 and a second diffraction element 43. The collimate lens 41 is configured to collimate the beam emitted by the laser emitter in a fast axis direction to form an elongated strip-shaped beam. As an optional implementation solution, the collimate lens may be a micro cylindrical lens. The first diffraction element 42 is configured to divide the elongated strip-shaped beam into a plurality of beams, and except for a central beam, remaining beams being deflected towards different spatial directions; and the second diffraction element is configured to correct the remaining beams, such that the remaining beams overlap with the central beam, and converge the overlapped beams to end faces of the corresponding optical fibers.

Specifically, as illustrated in FIG. 4, the laser beam is converted into elongated strip-shaped beams through the collimate lens 41. The elongated strip-shaped beam is divided by the first diffraction element 42 into three beams: a beam 1, a beam 2 (a central beam) and a beam 3. The beam 1 is deflected downwards and rightwards; the beam 2 is the central beam and is maintained in a transmission direction parallel to a system light axis; and the beam 3 is deflected upwards and leftwards. The second diffraction element 43 corrects the beam 1 and the beam 3, such that the beam 1 and the beam 3 overlap with the central beam 2 to form square light spots with relatively equalized linear dimensions and radiation angle in a fast axis and a slow axis, and to be converged to an end face of the corresponding optical fiber. The beam shaper based on optics diffraction may enable the beam to be highly efficiently coupled to the optical fiber.

As another implementation, as illustrated in FIG. 5, another beam shaper based on optics diffraction includes: a first lens 51, a first diffraction element 52, a second diffraction element 53 and a second lens 54. The first lens 51 is configured to collimate the beam emitted by the laser emitter in a fast axis direction to form an elongated strip-shaped beam; the first diffraction element 52 is configured to divide the elongated strip-shaped beam into a plurality of beams, and except for a central beam, remaining beams being deflected towards different spatial directions; the second diffraction element 53 is configured to correct the remaining beams, such that the remaining beams are parallel to the central beam; and the second lens 54 is configured to overlap the remaining beams from the second diffraction element with the central beam and converge the overlapped beams to end faces of the corresponding optical fibers. The beam shaper based on optics diffraction may enable the beams to be highly efficiently coupled to the optical fibers.

Specifically, as illustrated in FIG. 5, the laser beams are converted into elongated strip-shaped beams through the collimate lens 51. The elongated strip-shaped beam is divided by the first diffraction element 52 into three beams: a beam 1, a beam 2 (a central beam) and a beam 3. The beam 1 is deflected downwards and rightwards; the beam 2 is the central beam and is maintained in a transmission direction parallel to a system light axis; and the beam 3 is deflected upwards and leftwards. The second diffraction element 53 corrects the beam 1 and the beam 3, such that the beam 1 and the beam 3 are parallel to the central beam 2. The second lens 54 enables the paralleled beam 1, beam 2 and beam 3 to overlap each other to form square light spots with relatively equalized linear dimensions and radiation angle in a fast axis and a slow axis and to be converged to end faces of the corresponding optical fibers. The beam shaper based on optics diffraction may enable the beams to be highly efficiently coupled to the optical fibers.

The emitter lens 22 in the LiDAR system according to this embodiment is configured to collimate and emit lasers from the first optical fiber array 230. For example, the emitter lens 22 receives the lasers emitted by the plurality of emitter modules from the first optical fiber array 230, collimates the beams, forms a sector-like laser beam array, and irradiates onto the target object.

In a specific embodiment, the first optical fiber array 230 is a one-dimensional optical fiber array or a two-dimensional optical fiber array, and an end face of the first optical fiber array 230 is on a focal plane of the emitter lens 22.

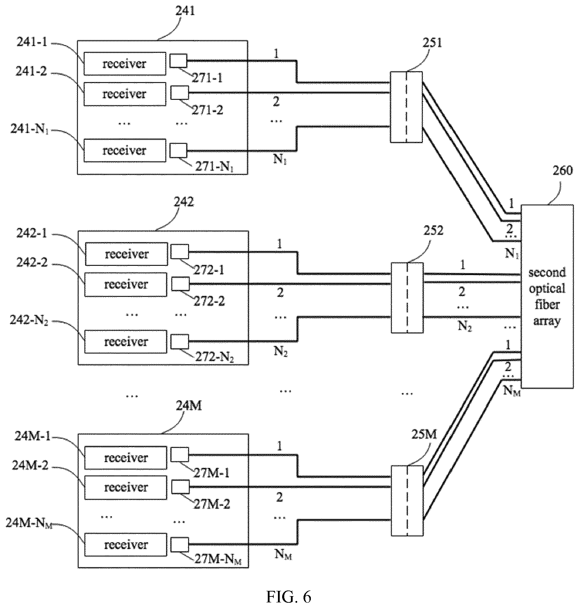

As illustrated in FIG. 6, in an optional embodiment, the receiver assembly 24 according to this embodiment includes M receiver modules, M multi-core optical fiber connectors and a second optical fiber array 260. M is a natural number which is greater than or equal to 2.

For example, the M receiver modules include a receiver module 241, a receiver module 242, ..., and a receiver module 24M; and the M multi-core optical fiber connectors include a multi-core optical fiber connector 251, a multi-core optical fiber connector 252, ..., and a multi-core optical fiber connector 25M.

Each receiver module in the receiver assembly according to this embodiment includes a plurality of receivers. Each receiver corresponding to an optical fiber is configured to receive reflected light transmitted via the optical fiber, and the plurality of optical fibers corresponding to the plurality of receivers in each receiver module are connected to the second optical fiber array 260 via a multi-core optical fiber connector. As illustrated in FIG. 6:
The receiver module 241 includes N₁ receivers, for example, a receiver 241-1, a receiver 241-2, ..., and a receiver 241-N₁. The N₁ receivers one-to-one correspond to N₁ optical fibers, and the N₁ optical fibers are connected to the second optical fiber array 260 by the multi-core optical fiber connector 251 to form N₁ optical paths from the N₁ receivers to the second optical fiber array 260.

The receiver module 242 includes N₂ receivers, for example, a receiver 242-1, a receiver 242-2, ..., and a receiver 242-N₂. The N₂ receivers one-to-one correspond to N₂ optical fibers, and the N₂ optical fibers are connected to the second optical fiber array 260 by the multi-core optical fiber connector 252 to form N₂ optical paths from the N₂ receivers to the second optical fiber array 260.

The receiver module 24M includes N_{M} receivers, for example, a receiver 24M-1, a receiver 24M-2, ..., and a receiver 24M-N_{M}. The N_{M} receivers one-to-one correspond to N_{M} optical fibers, and the N_{M} optical fibers are connected to the second optical fiber array 260 by the multi-core optical fiber connector 25M to form N_{M} optical paths from the N_{M} receivers to the second optical fiber array 260.

In this embodiment, N₁, N₂, ..., N_{M} are natural numbers, which are greater than or equal to 2.

In the embodiment of the present invention, one laser emitter and a corresponding receiver thereof form a laser ranging channel. Therefore, in the above embodiments, totally N₁+N₂+...+Nₘ laser ranging channels are formed.

In an optional embodiment, the plurality of receiver modules of the emitter assembly 24 may be assembled on the same circuit board; or each receiver module is assembled on a separate circuit board, for example, the receiver assembly includes eight receiver modules which are respectively assembled on eight separate circuit boards; or the plurality of receiver modules are assembled on a plurality of circuit boards in groups, for example, the receiver assembly includes eight receiver modules, and each two receiver modules are assembled as a group on one circuit boards, and the eight receiver modules are assembled on four circuit boards.

In a preferred embodiment, each receiver module further includes a plurality of micro-lens, the plurality of micro-lens one-to-one corresponding to the plurality of receivers in the receiver module, and the micro-lens being configured to converge the reflected light transmitted via the optical fibers to the corresponding receivers. As illustrated in FIG. 5:
The receiver module 241 includes N₁ micro-lens, for example, a micro-lens 271-1, a micro-lens 271-2, ..., and a micro-lens 271-N₁. The N₁ micro-lens one-to-one correspond to the receiver 241-1, the receiver 241-2, ..., and the receiver 241-N₁.

The receiver module 242 includes N₂ micro-lens, for example, a micro-lens 272-1, a micro-lens 272-2, ..., and a micro-lens 272-N₂. The N₂ micro-lens one-to-one correspond to the receiver 242-1, the receiver 242-2, ..., and the receiver 242-N₂.

The receiver module 24M includes N_{M} micro-lens, for example, a micro-lens 27M-1, a micro-lens 27M-2, ..., and a micro-lens 27M-N_{M}. The N_{M} micro-lens one-to-one correspond to the receiver 24M-1, the receiver 24M-2, ..., and the receiver 24M-N_{M}.

The receiver lens 23 is configured to receive reflected light of the lasers and converge the reflected light into the second optical fiber array 260. That is, an end face of the second optical fiber array 260 serve as a laser incident end of the receiver assembly 24. Specifically, the receiver lens 23 receives light reflected by the target object, that is, the reflected light. The reflected light is reflected light of the N₁+N₂+...+N_{M} lasers emitted by the first optical fiber array 230. The reflected light reaches the end faces of the second optical fiber array 260 after being converged by the receiver lens and reaches the N1+N2+...+NM receivers via the N1+N2+...+NM optical paths. For example, according to reversibility of the optical paths, after the sector-like laser beam array emitted by the emitter lens 21 is reflected by the target object, the reflected light still forms a sector-like array and reaches the receiver lens 23 and is converged, and finally enters the second optical fiber array 260.

In this embodiment, N₁, N₂, ..., N_{M} are natural numbers, which are greater than or equal to 2.

In a specific embodiment, the second optical fiber array 260 is a one-dimensional optical fiber array or a two-dimensional optical fiber array, and the end face of the second optical fiber array 260 is on a focal plane of the receiver lens 23.

An embodiment of the present invention further provides a laser ranging method. The laser ranging method implements laser ranging by using the LiDAR system according to the above embodiment. The specific structure and working process of the LiDAR system may be referenced to the description in the above embodiment, which are thus not described herein any further.

In the LiDAR system according to the embodiment of the present invention, the optical paths from all the laser emitters to the emitter lens and the optical paths from the receiver lens to the receivers are all implemented by thin and soft optical fibers. The outlet end of the laser and the incident end of the reflected light are both end face of optical fiber array. Therefore, as long as the optical fiber array of the emitter assembly is mounted on the focal plane of the emitter lens, and the optical fiber array of the receiver assembly is mounted on the focal plane of the receiver lens, arrangement of the laser emitters and receives may not be subject to restrictions of the emit and receive angles, and the laser emitters and receivers may be deployed at any position of the laser scanning component. In addition, since the optical fiber array has a small dimensional but a high integration, when the optical fiber array is used as the outlet end of the laser in the emitter assembly and the incident end of the laser in an incident assembly, the emitter end and the receiver end each only need a lens window having a small diameter, such that multi-layer LiDAR having tens of channels is practiced. In summary, with the technical solution according to this embodiment, the size of the mechanically rotary LiDAR may be reduced.

In another aspect, since the optical fiber array is used as the laser outlet end of the emitter assembly and the laser incident end of the receiver assembly, relative angular positions of multiple laser ranging channels are accurately fixed. Therefore, regardless of how many laser ranging channels are provided in the LiDAR system according to this embodiment, the remaining laser ranging channels may be accurately focused and light-axis collimated only by randomly selecting any two laser ranging channels for focusing and light-axis collimate, with no need to calibrate all the laser ranging channels one by one or with no need to adjust an angular spacing between adjacent channels one by one. This improves the assembling and calibration efficiencies of the multi-layer LiDAR greatly and lowers the production cost.

In addition, in the LiDAR system according to the embodiment of the present invention, the optical fibers between the laser emitters and the first optical fiber array are connected in groups by the plurality of multi-core optical fiber connectors, and the optical fibers between the receivers and the second optical fiber array are also connected in groups by the plurality of multi-core optical fiber connectors. Therefore, when a laser emitter or receiver encounters a fault, the multi-core optical fiber connector connecting the laser emitter or receiver only needs to be separated, and the corresponding emitter module or receiver module is disassembled for repair or replacement, with no need to disassemble all the laser emitters or receivers. In addition, by the multi-core optical fiber connector, the laser emitters and the optical fiber arrays of the emitter assembly are modules independent of each other, and the receivers and the optical fiber arrays of the receiver assembly are also modules independent of each other. Therefore, disassembling and repairing the laser emitters or receivers may cause no impacts onto the arrangement and position of the optical fiber array. Upon completion of the repairing, focusing and light-axis collimate of the laser ranging channels are not needed, thereby lowering the repair cost of the LiDAR. In summary, in the LiDAR system according to this embodiment, the plurality of laser emitters are connected to the optical fiber array of the emitter assembly in groups by the plurality of multi-core optical fiber connectors, and the plurality of receivers are connected to the optical fiber array of the receiver assembly in groups by the plurality of multi-core optical fiber connectors, such that the emitter assembly and the receiver assembly of the LiDAR are structurally modularized. In this way, assembling and disassembling in groups, and plug-and-play of the emitter assembly and the receiver assembly are achieved, and thus the maintenance cost of the LiDAR is lowered.

The above embodiments and accompanying drawings are merely used to exemplarily illustrate the technical solutions of the present invention, instead of limiting the protection scope of the present invention. Any modification, equivalent replacement, or improvement made without departing from the spirit and principle of the present invention should fall within the protection scope of the present invention.

## Claims

1. A light detection and ranging, LiDAR, system, comprising: a laser scanning component and a rotary component; wherein
the rotary component is configured to rotate the laser scanning component; and
the laser scanning component comprises:
an emitter assembly, comprising a plurality of emitter modules, a plurality of multi-core optical fiber connectors and a first optical fiber array, each of the plurality of emitter modules comprising a plurality of laser emitters, wherein each laser emitter corresponding to an optical fiber is configured to emit laser and light transmission is implemented via the optical fiber , and the plurality of optical fibers corresponding to the plurality of laser emitters are connected to the first optical fiber array via a multi-core optical fiber connector;
an emitter lens, configured to collimate and emit lasers from the first optical fiber array;
a receiver assembly, comprising a plurality of receiver modules, a plurality of multi-core optical fiber connectors and a second optical fiber array, each of the plurality of receiver modules comprising a plurality of receivers, wherein each receiver corresponding to an optical fiber is configured to receive reflected light transmitted via the optical fiber, and the plurality of optical fibers corresponding to the plurality of receivers are connected to the second optical fiber array via a multi-core optical fiber connector; and
a receiver lens, configured to receive the reflected light of the lasers, and converge the reflected light into the second optical fiber array.

2. The LiDAR system according to claim 1, wherein each emitter module further comprises a plurality of beam shapers, the plurality of beam shapers one-to-one corresponding to the plurality of laser emitters in the emitter module, and the beam shapers being configured to couple the lasers emitted by the laser emitters to the corresponding optical fibers.

3. The LiDAR system according to claim 2, wherein the beam shaper is a dual-cylindrical lens, generatrixes of two cylindrical surfaces of the dual-cylindrical lens being orthogonal to each other.

4. The LiDAR system according to claim 2, wherein the beam shaper is a beam shaper based on optics diffraction, and comprises a collimate lens, a first diffraction element and a second diffraction element; wherein
the collimate lens is configured to collimate the beam emitted by the laser emitter in a fast axis direction to form an elongated strip-shaped beam;
the first diffraction element is configured to divide the elongated strip-shaped beam into a plurality of beams, and except for a central beam, remaining beams being deflected towards different spatial directions; and
the second diffraction element is configured to correct the remaining beams, such that the remaining beams overlap with the central beam and converge the overlapped beams to end faces of the corresponding optical fibers.

5. The LiDAR system according to claim 2, wherein the beam shaper is a beam shaper based on optics diffraction, and comprises a first lens, a first diffraction element, a second diffraction element and a second lens; wherein
the first lens is configured to collimate the beam emitted by the laser emitter in a fast axis direction to form an elongated strip-shaped beam;
the first diffraction element is configured to divide the elongated strip-shaped beam into a plurality of beams, and except for a central beam, remaining beams being deflected towards different spatial directions;
the second diffraction element is configured to correct the remaining beams, such that the remaining beams are parallel to the central beam; and
the second lens is configured to overlap the remaining beams from the second diffraction element with the central beam and converge the overlapped beams to end faces of the corresponding optical fibers.

6. The LiDAR system according to claim 1, wherein each receiver module further comprises a plurality of micro-lens, the plurality of micro-lens one-to-one corresponding to the plurality of receivers in the receiver module, and the micro-lens being configured to converge the reflected light transmitted via the optical fibers to the corresponding receivers.

7. The LiDAR system according to claim 1, wherein an end face of the first optical fiber array is on a focal plane of the emitter lens; an end face of the second optical fiber array is on a focal plane of the receiver lens.

8. The LiDAR system according to any one of claims 1 to 7, wherein the first optical fiber array is a one-dimensional optical fiber array or a two-dimensional optical fiber array; the second optical fiber array is a one-dimensional optical fiber array or a two-dimensional optical fiber array.

9. The LiDAR system according to any one of claims 1 to 5, wherein the plurality of emitter modules of the emitter assembly are assembled on the same circuit board, or each emitter module is assembled on a separate circuit board, or the plurality of emitter modules are assembled on a plurality of circuit boards in groups.

10. The LiDAR system according to claim 1 or 6, wherein the plurality of receiver modules of the receiver assembly are assembled on the same circuit board, or each receiver module is assembled on a separate circuit board, or the plurality of receiver modules are assembled on a plurality of circuit boards in groups.

11. A laser ranging method, wherein a light detection and ranging, LiDAR, system is used for laser ranging, and the LiDAR system comprises a laser scanning component and a rotary component; wherein the laser scanning component comprises: an emitter assembly, an emitter lens, a receiver assembly and a receiver lens; wherein the emitter assembly comprises a plurality of emitter modules, a plurality of multi-core optical fiber connectors and a first optical fiber array, each of the plurality of emitter modules comprising a plurality of laser emitters, wherein each laser emitter corresponds to an optical fiber, and the plurality of optical fibers corresponding to the plurality of laser emitters are connected to the first optical fiber array via a multi-core optical fiber connector; and the receiver assembly comprises a plurality of receiver modules, a plurality of multi-core optical fiber connectors and a second optical fiber array, each of the plurality of receiver modules comprising a plurality of receivers, wherein each receiver corresponds to an optical fiber, and the plurality of optical fibers corresponding to the plurality of receivers are connected to the second optical fiber array via a multi-core optical fiber connector;
the method comprises:
rotating, by the rotary component, the laser scanning component;
emitting, by each laser emitter, a laser, wherein the laser is transmitted via the corresponding optical fiber and is emitted from the first optical fiber array;
collimating and emitting, by the emitter lens, the laser from the first optical fiber array;
receiving and converging, by the receiver lens, reflected light of the laser into the second optical fiber array; and
receiving, by each receiver, the reflected light via the corresponding optical fiber.

12. The laser ranging method according to claim 11, wherein each emitter module comprises a plurality of beam shapers, the plurality of beam shapers one-to-one corresponding to the plurality of laser emitters in the emitter module;
coupling, by the beam shapers, the lasers emitted by the laser emitters to the corresponding optical fibers.

13. The laser ranging method according to claim 12, wherein the beam shaper is a dual-cylindrical lens, generatrixes of two cylindrical surfaces of the dual-cylindrical lens being orthogonal to each other.

14. The laser ranging method according to claim 12, wherein the beam shaper is a beam shaper based on optics diffraction, and comprises a collimate lens, a first diffraction element and a second diffraction element; wherein the coupling, by the beam shapers, the lasers emitted by the laser emitters to the corresponding optical fibers, comprises:
collimating, by the collimate lens, the beam emitted by the laser emitter in a fast axis direction to form an elongated strip-shaped beam;
dividing, by the first diffraction element, the elongated strip-shaped beam into a plurality of beams, and except for a central beam, remaining beams being deflected towards different spatial directions; and
correcting, by the second diffraction element, the remaining beams, such that the remaining beams overlap with the central beam and converging the overlapped beams to end faces of the corresponding optical fibers.

15. The laser ranging method according to claim 12, wherein the beam shaper is a beam shaper based on optics diffraction, and comprises a first lens, a first diffraction element, a second diffraction element and a second lens; wherein the coupling, by the beam shapers, the lasers emitted by the laser emitters to the corresponding optical fibers comprises:
collimating, by the first lens, the beam emitted by the laser emitter in a fast axis direction to form an elongated strip-shaped beam;
dividing, by the first diffraction element, the elongated strip-shaped beam into a plurality of beams, and except for a central beam, remaining beams being deflected towards different spatial directions;
correcting, by the second diffraction element, the remaining beams, such that the remaining beams are parallel to the central beam;
overlapping, by the second lens, the remaining beams from the second diffraction element with the central beam and converging the overlapped beams to end faces of the corresponding optical fibers.

16. The laser ranging method according to claim 11, wherein each receiver module further comprises a plurality of micro-lens, the plurality of micro-lens one-to-one corresponding to the plurality of receivers in the receiver module;
converging, by the micro-lens, the reflected light transmitted via the optical fibers to the corresponding receivers.

17. The laser ranging method according to claim 11, wherein an end face of the first optical fiber array is on a focal plane of the emitter lens; an end face of the second optical fiber array is on a focal plane of the receiver lens.

18. The laser ranging method according to any one of claims 11 to 17, wherein the first optical fiber array is a one-dimensional optical fiber array or a two-dimensional optical fiber array; the second optical fiber array is a one-dimensional optical fiber array or a two-dimensional optical fiber array.
